# EUROPEAN PATENT SPECIFICATION

(11) **EP 4 421 731 B1**
(45) Date of publication and mention of the grant of the patent: **14.10.2026**
(21) Application number: 22883142.6
(22) Date of filing: 31.03.2022
(51) Int. Cl.: G06T 7/00, G06T 7/90, G06T 1/00, G01N 21/88, G06N 3/0464, G06N 20/00, G06V 10/774

(54) **DEFECT DETECTION METHOD, DEFECT DETECTION SYSTEM, AND DEFECT DETECTION PROGRAM**
FEHLERERKENNUNGSVERFAHREN, FEHLERERKENNUNGSSYSTEM UND FEHLERERKENNUNGSPROGRAMM
PROCÉDÉ DE DÉTECTION DE DÉFAUT, SYSTÈME DE DÉTECTION DE DÉFAUT ET PROGRAMME DE DÉTECTION DE DÉFAUT

(30) Priority: 18.10.2021 JP 2021170158; 14.01.2022 JP 2022004220
(43) Date of publication of application: 28.08.2024
(73) Proprietor: Anamorphosis Networks Co., Ltd., Kyoto-shi, Kyoto, 600-8898 (JP)
(72) Inventor: TSUJIMOTO, Shogo, Kyoto-shi, Kyoto 600-8898 (JP)
(74) Representative: Carangelo, Pierluigi
(86) International application number: PCT/JP2022/016721
(87) International publication number: WO 2023/067829

(56) References cited:
- WO-A1-2021/070675
- JP-A- 2019 015 654
- JP-A- 2020 013 507
- JP-A- 2020 035 282
- JP-A- 2020 093 076
- US-A1- 2019 012 579
- US-A1- 2021 166 374
- BHATT PRAHAR M ET AL: "Image-Based Surface Defect Detection Using Deep Learning: A Review", JOURNAL OF COMPUTING AND INFORMATION SCIENCE IN ENGINEERING, vol. 21, no. 4, 1 August 2021 (2021-08-01), pages 1 - 15, XP093079299, ISSN: 1530-9827, DOI: 10.1115/1.4049535
- JUN-FENG JING ET AL: "Automatic fabric defect detection using a deep convolutional neural network", COLORATION TECHNOLOGY, vol. 135, no. 3, 14 March 2019 (2019-03-14), Hoboken, USA, pages 213 - 223, XP055698538, ISSN: 1472-3581, DOI: 10.1111/cote.12394

## Description

### TECHNICAL FIELD

The present disclosure relates to a defect detection method, a defect detection system, and a defect detection program, and more particularly, to a method, a system, and a computer program for detecting a defect appearing in various products.

### BACKGROUND ART

Conventionally, visual inspection of appearance has been performed for quality control in a manufacturing process of various industrial products. However, in visual inspection, an inspector is required to have an expert skill, and it is difficult to improve efficiency and achieve mass production.

It is required to accurately and efficiently detect a defect appearing in an appearance of an industrial product by an image processing technique of appropriately analyzing imaging data obtained by an imaging device.

Patent Document 1 discloses an appearance inspection device that executes appearance inspection at high speed and with high accuracy by using a neural network. In the appearance inspection system, an identifier shoots an inspection target, and determines a defect size by using a CNN in a case where a defect is captured in an inspection image. The CNN does not perform semantic segmentation by using an inspection image as input, but outputs probability of which class a size of a defect shown in an image belongs to, so as to reduce an amount of calculation. In a case where the defect size is larger than a threshold, it is recorded that correction is necessary. As described above, the appearance inspection device of Patent Document 1 merely determines a size of a defect.

Patent Document 2 discloses a target object detection device that two-dimensionally and three-dimensionally detects a target vehicle based on two-dimensional image information and grasps a width and a depth of the target vehicle. In detecting a vehicle that is a target object, the target object detection device merely grasps a three-dimensional size of a width and a depth of the vehicle, and does not detect various defects in appearance, for example.

Patent Document 3 discloses an appearance inspection system including an imaging unit that captures an appearance of a target object, and a plurality of classification units that classify a defect of a target object into defects set in advance based on a captured image of the imaging unit. Although a learned model is used in the classification unit, Patent Document 3 does not disclose a method and a device for effectively training the learned model.

Patent Document 4 discloses an image processing device that identifies a specific region of user image data as a processing target and performs image processing preferable for the user. The image processing device extracts an outline region of a predetermined part of the user's face.

Patent Document 5 provides a pattern inspection system that can shorten learning time by saving time and effort of true value creation work of learning data and reducing an amount of learning data. In particular, the pattern inspection system includes an image selection unit that selects a learning pattern image used for machine learning from a plurality of pattern images.

Patent Document 6 discloses a machine-learning device that creates training data automatically from images of inspection targets that have a symbol placed on any defect. Thus it reduces manual labelling effort and enables rapid, on-the-fly generation of large, correctly labelled datasets.

### PRIOR ART DOCUMENTS

### PATENT DOCUMENTS

Patent Document 1: JP-A-2021-92887
Patent Document 2: JP-A-2021-86520
Patent Document 3: JP-A-2021-67508
Patent Document 4: JP-A-2021-43797
Patent Document 5: JP-A-2020-35282
Patent Document 6: US 2019/012579 A1

### SUMMARY OF THE INVENTION

### PROBLEMS TO BE SOLVED BY THE INVENTION

An object of the present disclosure is to accurately, completely, automatically, and efficiently detect various defects in various products.

### SOLUTIONS TO THE PROBLEMS

A defect detection method of this disclosure comprises steps of: applying, by a processing circuit, a predetermined color for each type of defect to a defective portion having a contour shape and a defective portion having a region shape that may be present in an inspection target object in an original image obtained by imaging of the inspection target object; preparing one or more sets of first teaching data by the processing circuit using, as the first teaching data, original image data obtained by imaging of the inspection target object and having a defect and marked image data obtained by labeling with a predetermined color for each type of defect on the original image data in the step of applying a predetermined color; preparing one or more sets of second teaching data by the processing circuit using, as the second teaching data, original image data obtained by imaging of the inspection target object and having no defect and identity mapping data having no difference from the original image data; and preparing a learned machine learning model by the processing circuit performing learning using the first teaching data and the second teaching data.

In the step of preparing a learned machine learning model, tiling processing is performed on the original image data and the marked image data in the first teaching data to obtain segmented images, and then learning of a correspondence relationship between the original image data and the marked image data is performed for each tiled segmented image,
tiling processing is similarly performed on the original image data and the identity mapping data in the second teaching data to obtain segmented images, and then learning of a correspondence relationship between the original image data and the identity mapping data is performed for each tiled segmented image,
in both types of the tiling processing, segmented images are created such that, after tiling, both edge portions of adjacent segmented images overlap, and further,
in a case where a marked image data as a segmented image in the first teaching data does not include a marking portion, learning of a correspondence relationship between original image data as the segmented image and identity mapping data of the original image data is performed.

The defect detection method of this disclosure further comprises steps of: acquiring, by the processing circuit, image data of an inspection target object output by said learned machine learning model by inputting image data of the inspection target object to the machine learning model, the input image data having been subjected to the tiling processing; acquiring predicted image data by the processing circuit subtracting input image data from output image data; and performing reverse tiling processing, by the processing circuit, on the predicted image data, the reverse tiling processing performing combination by ignoring a portion of an outer half of an overlapping edge portion in each piece of the predicted image data before combination.

### EFFECTS OF THE INVENTION

The defect detection method and the defect detection system of the present disclosure can accurately, completely, and efficiently detect various defects in various products. In particular, the defect detection method and the defect detection system of the present disclosure can detect and classify a non-defective product, a defective product including a known defect, and a defective product including an unknown defect.

### BRIEF DESCRIPTION OF DRAWINGS

[Fig. 1] Fig. 1 is a system configuration diagram of a defect detection system according to an embodiment.
[Fig. 2] Fig. 2 is a table in which a correspondence relationship between a type of a defect and a predetermined color at the time of labeling is recorded.
[Fig. 3A] Fig. 3A is an example of use of coloring on image data in a teaching data creation phase by coloring.
[Fig. 3B] Fig. 3B is an example of contour labeling data and region labeling data.
[Fig. 4A] Fig. 4A is a diagram schematically illustrating tiling processing and processing of applying a machine learning model for defect detection in the defect detection system according to the embodiment.
[Fig. 4B] Fig. 4B is a flowchart illustrating segmentation of image data in the tiling processing in the defect detection system according to the embodiment.
[Fig. 5] Fig. 5 is a diagram schematically illustrating the tiling processing including occurrence of overlapping margins.
[Fig. 6A] Fig. 6A is a diagram schematically illustrating a state in which a correspondence relationship between original image data and labeled image data is learned in a network structure.
[Fig. 6B] Fig. 6B is a diagram schematically illustrating a state in which a correspondence relationship between original image data and answer image data is learned in a network structure, and is a schematic diagram particularly related to learning of a defective product image.
[Fig. 6C] Fig. 6C is a diagram schematically illustrating a state in which a correspondence relationship between original image data and answer image data is learned in a network structure, and is a schematic diagram particularly related to learning of a non-defective product image.
[Fig. 6D] Fig. 6D shows output examples of a learned model with respect to image data of each of a non-defective product, a defined defective product, and an unknown defective product.
[Fig. 7A] Fig. 7A is a diagram illustrating a series of examples of (1) an original image, (2) an input image, (3) an output image, (4) a predicted image, and (5) an answer image (teaching image).
[Fig. 7B] Fig. 7B is a diagram specifically illustrating a lower half not including a defective portion in a series of examples of (1) an original image, (2) an input image, (3) an output image, (4) a predicted image, (5) a trimmed answer image, and (6) an answer image.
[Fig. 7C] Fig. 7C is a diagram illustrating an upper half including a defective portion in a series of examples of (1) an original image, (2) an input image, (3) an output image, (4) a predicted image, (5) a trimmed answer image, and (6) an answer image.
[Fig. 8A] Fig. 8A is a diagram schematically illustrating reverse tiling processing.
[Fig. 8B] Fig. 8B is a flowchart illustrating the reverse tiling processing of the defect detection system according to the embodiment.
[Fig. 9] Fig. 9(1) is an example of predicted image data returned to an original size by the reverse tiling processing. Fig. 9(2) is an example of predicted image data generated by adjusting hue, saturation, and brightness (HSV) between individual original tiles in the predicted image data returned to the original size illustrated in Fig. 9(1).
[Fig. 10] Fig. 10 is a diagram that illustrates processing for detecting a non-defective product and processing for detecting an unknown defective (faulty) product.

### DETAILED DESCRIPTION

Hereinafter, an embodiment will be described in detail with reference to the drawings as appropriate. However, description that is detailed more than necessary may be omitted. For example, detailed description of an already well-known matter and redundant description of substantially the same configuration may be omitted. This is to avoid unnecessary redundancy of description below and to facilitate understanding of those skilled in the art.

Note that the inventor provides the accompanying drawings and the description below so that those skilled in the art can fully understand the present disclosure, and do not intend to limit the subject matter described in claims by these drawings and description.

### 1. [Details leading to present disclosure]

Conventionally, visual inspection of appearance has been performed for quality control in a manufacturing process of various products. Since the visual inspection requires an inspector to have an expert skill, it is difficult to improve efficiency. Therefore, it is required to automatically and accurately detect a defect appearing in an appearance of a product by an image processing technique.

The image processing technique here is, for example, to install an imaging device (for example, a camera) that captures an image of a product being manufactured moving on a manufacturing line of the product from a portion above the manufacturing line, and automatically detect a defective portion of a product from image data of the product captured by the imaging device. For example, when image data obtained by an X-ray imaging device is used, not only a defective portion on an appearance of a product but also a defective portion inside a product can automatically be detected. Various pieces of software for processing image data, such as, for example, a rule-based algorithm, may be used to automatically detect a defective portion from image data of a product. Note that, in the present disclosure, a metal processed product, a metal (for example, aluminum) ingot, a resin molded product, a wall material, or the like is assumed as a product.

However, there are various defects of a product, such as "dirt", "flaw", "crack", "discoloration", and "roughness". In addition to the above, defects are different for each product, and ways that a defect appears on an image is also different. It is not easy to automatically detect a defect accurately and completely for an individual product.

The present disclosure has been made under awareness of the above problem. That is, the defect detection system of the present disclosure prepares a learned machine learning model obtained by learning using, as teaching data, original image data of an inspection object, and marked image data in which a defective portion having a contour shape and/or a defective portion having a region shape that may be present in the inspection object are labeled, on an image, with a predetermined color for each type of defect. Furthermore, the defect detection system of the present disclosure inputs image data of an inspection target product as an inspection object to the learned machine learning model, and predicts and detects a defect of the product. In this way, the defect detection system of the present disclosure can accurately, completely, and efficiently detect various defects in various products.

Furthermore, the present disclosure is also intended to detect an unknown defect (fault). Here, the unknown defect (fault) is a defect (fault) that does not correspond to a non-defective product or a defective product pattern defined as teaching data as described above. In order to realize detection of an unknown defect, the present disclosure intends to realize a hybrid learning method of a non-defective product learning and defective product learning. Based on this, classification of a non-defective product, classification of a defective product pattern (dirt, flaw, crack, discoloration, roughness, and the like) defined as teaching data, and classification of an unknown defect are performed. In this learning method, a machine learning model is trained so as to output the same image as an input image for a non-defective product, and a machine learning model is trained so as to output a defective similar pattern defined as teaching data for a defective product. Training of a machine learning model so as to output the same image as an input image is generally referred to as learning of identity mapping. The defect detection system of the present disclosure that performs learning as described above predicts that an output image includes an unknown defect in a case where identity mapping is not realized and a defined defective similar pattern is not output either in a prediction phase.

Note that image data handled by the image processing technique according to the present disclosure is basically color image data. Since one piece of (color) image data is constituted by three layers of RGB, processing for each of three layers of RGB in one piece of image data is divided, but hereinafter, unless otherwise specified, processing is described as one piece of processing without being divided. Further, for example, when image data obtained by an X-ray imaging device is used, it is possible to automatically detect not only an appearance of a product but also a defective portion inside the product as a matter of course.

### 2. [Embodiment]

Hereinafter, a preferred embodiment of the present disclosure will be described with reference to the accompanying drawings.

### 2.1. [System configuration]

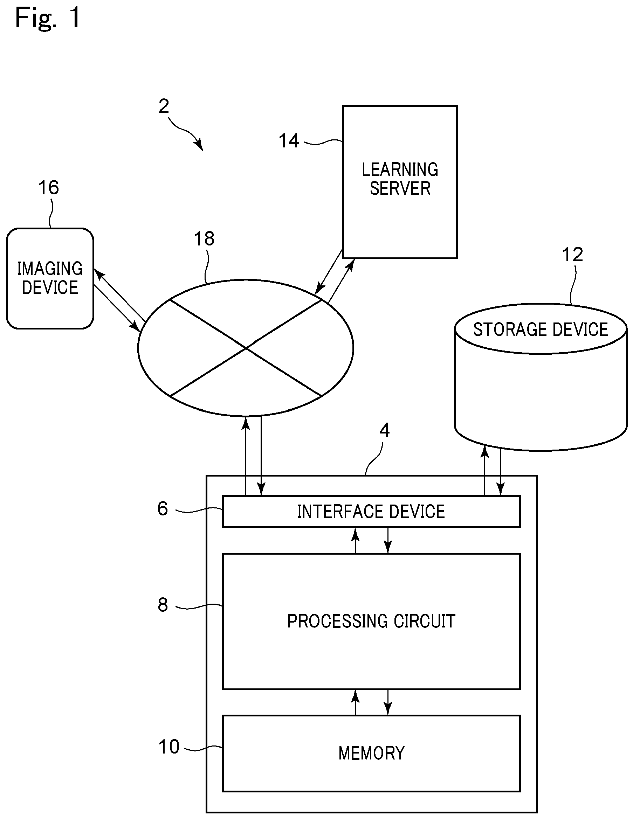

The defect detection system and the defect detection method according to the embodiment are a system and a method of automatically detecting a defective portion from image data of an industrial product in which some defect appears. Fig. 1 is a system configuration diagram of a defect detection system 2 according to the present embodiment.

The defect detection system 2 includes a computer device 4 and a storage device 12. The computer device 4 and the storage device 12 are connected by a wired or wireless communication line, and can transmit and receive data to and from each other. The defect detection system 2 is further connected to an external network 18, and exchanges data with another computer system connected to the external network 18. The defect detection system 2 is particularly connected to one or more imaging devices 16. Furthermore, the defect detection system 2 is desirably connected to a learning server 14.

The computer device 4 is a server machine equipped with one or more processors, a workstation computer, or the like.

The storage device 12 is a storage device provided outside the computer device 4, such as a disk drive or a flash memory, and stores various databases, various data sets, and various computer programs used in the computer device 4. In the storage device 12, for example, image data transmitted from the outside or from the imaging device 16, which will be described later, is recorded.

The imaging device 16 is, for example, an optical camera, and includes, for example, an imaging element such as a CMOS or a CCD, and an imaging controlling means for controlling the imaging element. As described above, the imaging device 16 may be, for example, an X-ray imaging device. Further, the imaging device 16 preferably separately includes an optical system such as a lens. The imaging device 16 transmits and receives image data to and from the computer device 4 and the like.

The learning server 14 performs learning of a machine learning model to be described later by using image data and the like recorded in the storage device 12.

The external network 18 is, for example, the Internet, and is connected to the computer device 4 via an interface device 6 such as a network terminal.

Furthermore, the computer device 4 includes the interface device 6, a processing circuit 8, and a memory 10.

The interface device 6 is an interface unit capable of acquiring data from the outside, including a network terminal, a video input terminal, a USB terminal, a keyboard, a mouse, and the like. Various pieces of data are acquired from the outside via the interface device 6. The data is, for example, image data of a product as an inspection target, and image data of a product in which coloring is applied on an image as data to a defective portion, which will be described later. After acquisition, these pieces of data may be recorded in the storage device 12. Data recorded in the storage device 12 may be appropriately acquired in the computer device 4 via the interface device 6.

Furthermore, various pieces of data generated by the defect detection system 2 are appropriately recorded in the storage device 12. The various pieces of data are, for example, predicted image data output from a learned machine learning model to be described later. Various pieces of data generated by the defect detection system 2 and appropriately recorded in the storage device 12 may be acquired again in the computer device 4 via the interface device 6.

The processing circuit 8 includes one or more processor(s). Here, the processor includes a central processing unit (CPU) and a graphics processing unit (GPU). Various types of processing of the defect detection system 2 according to the present embodiment are realized by the processing circuit 8 executing various programs. Note that the various types of processing may be realized by an application specific integrated circuit (ASIC) and the like, or may be realized by a combination of these.

The processing circuit 8 in the present disclosure may include a plurality of signal processing circuits. Each signal processing circuit is, for example, a central processing unit (CPU) or a graphics processing unit (GPU), and may be referred to as a "processor". A certain processor (for example, a GPU) may execute a part of various types of processing in the defect detection system 2 according to the present embodiment, and another processor (for example, a certain CPU) may execute another part of the processing.

The memory 10 is a data rewritable storage unit in the computer device 4, and includes, for example, a random access memory (RAM) including a large number of semiconductor storage elements. The memory 10 temporarily stores a specific computer program, a variable value, a parameter value, and the like when the processing circuit 8 executes various types of processing. Note that the memory 10 may include what is called a read only memory (ROM). In the ROM, a computer program for realizing processing of the defect detection system 2 described below is stored in advance. The processing circuit 8 reads a computer program from the ROM and loads the computer program into a RAM, so that the processing circuit 8 can execute the computer program.

The defect detection system 2 according to the present embodiment is constructed using a computer language such as Python. A computer language that may be used for constructing the defect detection system 2 according to the present disclosure is not limited to these, and another computer language may be used as a matter of course.

Furthermore, in the defect detection system 2 according to the present embodiment, a learned machine learning model is constructed. As will be described later, the machine learning model according to the present embodiment is constructed using, for example, a network structure such as U-Net or Res-net.

### 2.2. [Operation of system]

The defect detection method according to the present embodiment roughly includes four phases below.
(1) Teaching data creation phase by coloring
(2) Preprocessing and learning phase
(3) Prediction phase
(4) Post-processing and detection phase

The defect detection system according to the present embodiment executes the defect detection method including the four phases described above. Each of the phases will be described below.

### 2.2.1. [Teaching data creation phase by coloring]

In the defect detection system according to the present embodiment, a color as a label is put on (applied to) a defective portion with respect to original image data including a defect using an appropriate coloring tool. Here, the appropriate coloring tool is, for example, "Paint" of Windows (registered trademark) by Microsoft (registered trademark) Corporation.

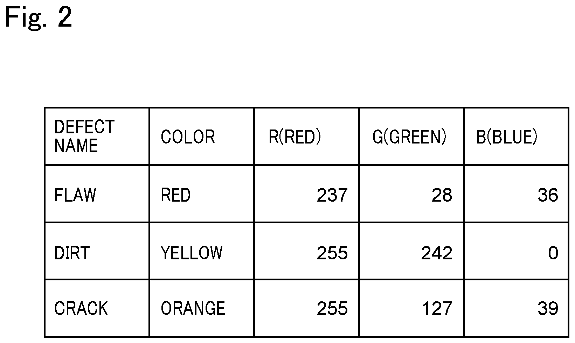

Fig. 2 is a table in which color used at the time of coloring, that is, at the time of labeling is recorded. Fig. 2 illustrates that a color applied by a system operator can be changed according to a type of a defective (that is, faulty) portion in original image data including a defect in an appearance of a product as an inspection target object. For example, "red" is applied to a "flaw" portion. Furthermore, specific component information of red (R), green (G), and blue (B) of the "red" is recorded in the table. Here, component information of red (R), green (G), and blue (B) of "red" is "237", "28", and "36".

Editing of a record in this table is performed by a system operator. That is, a specific "color name" is determined by a system operator and recorded in the table. Further, specific component information of red (R), green (G), and blue (B) of each color is also determined by a system operator and recorded in the table.

This table is stored in the memory 10 and the storage device 12 as one file, for example.

Further, "yellow" is applied to a "dirt" portion, and specific component information of red (R), green (G), and blue (B) of the "yellow" is also recorded in the table. Here, component information of red (R), green (G), and blue (B) of "yellow" is "255", "242", and "36".

Further, "orange" is applied to a "crack" portion, and specific component information of R (red) G (green) B (blue) of the "orange" is also recorded in the table. Here, component information of red (R), green (G), and blue (B) of "orange" is "255", "127", and "39".

As a type of a defect (fault) of a product, in addition to "dirt", "flaw (defect)", and "crack", "discoloration", "roughness", "unevenness", and the like are assumed. As a matter of course, another defect (fault) may be included. These defects are also labeled with a predetermined color for each type of defect, that is, a predetermined color is applied for each type of defect. For example, "green" is applied to a "discoloration" portion, "blue" is applied to a "roughness" portion, and "purple" is applied to an "unevenness" portion. For each color, component information of red (R), green (G), and blue (B) is determined and recorded in the table illustrated in Fig. 2. A correspondence relationship between a type of defect and a predetermined color is held by the table, which leads to classification of a defect shown in input image data.

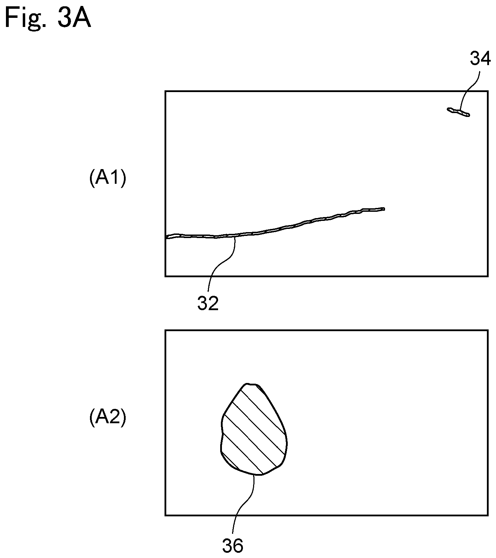

Fig. 3A illustrates a usage example of coloring on image data in a teaching data creation phase by coloring. Specifically, Fig. 3A(A1) is a usage example of a "Brush" of "Paint". The "Brush" is used to apply a color to a linear defective portion 32 or to apply a color to a fine defective portion 34. A usage example of the "Brush" is likely to lead to "contour labeling" described later.

Fig. 3A(A2) illustrates a usage example of "Polygon tool" of "Paint". "Polygon tool" is used to apply a color to a defective portion 36 of a range having a certain area. A usage example of "Polygon tool" is likely to lead to "region labeling" described later.

### 2.2.2. [Preprocessing and learning phase]

In the defect detection system and the defect detection method according to the present embodiment, teaching data applied with a color in [Teaching data creation phase by coloring], that is, marked learning data is divided into contour labeling data and region labeling data.

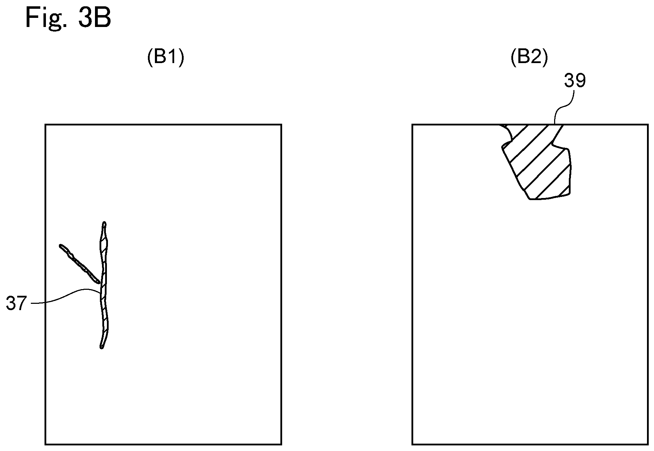

Fig. 3B(B1) is an example of contour labeling data 37, and Fig. 3B(B2) is an example of region labeling data 39. Contour labeling refers to labeling a contour of image data. That is, the contour labeling is for obtaining marked image data by attaching a label, on an image, as a predetermined color to a defective portion having a contour shape that may be present in an inspection target object, and is effective for creating teaching data for a thin or small defect (fault). The labeling is compatible with an imaging method for creating a contrast-enhanced pattern by obliquely illuminating a product as an inspection target. On the other hand, region labeling refers to labeling a region of image data. That is, the region labeling is for obtaining marked image data by attaching a label, on an image, as a predetermined color to a defective portion having a region shape that may be present in an inspection target object, and is effective for creating teaching data for a defect (fault) having a large range. The labeling is compatible with an imaging method for creating a tone-enhanced pattern by illuminating a product to as an inspection target from a vertical direction.

Two machine learning models may be prepared corresponding to contour labeling data and region labeling data. That is, a machine learning model that learns only contour labeling data as correct answer data (teaching data) and detects a defect having a contour shape, and a machine learning model that learns only region labeling data as correct answer data (teaching data) and detects a defect having a region shape may be prepared. The present inventor has grasped that accuracy of defect prediction and detection tends to be improved by preparing two machine learning models corresponding to contour labeling data and region labeling data.

On the other hand, a machine learning model may be configured such that one machine learning model learns contour labeling data and region labeling data as correct answer data (teaching data) and detects a defect having a contour shape and a defect having a region shape.

Next, tiling processing will be described. At the time of learning of a machine learning model, when image compression or the like is performed on original image data and marked image data in a case where the number of pixels of the original image data and the marked image data is large to some extent, resolution loss occurs. When learning of a machine learning model is performed by teaching data in which resolution loss occurs, that is, original image data and marked image data in which pixel loss occurs, it may be assumed that a learned machine learning model that overlooks a defect, particularly overlooks a small defect is obtained.

In view of the above, in the defect detection system and the defect detection method according to the present embodiment, image data processed by a machine learning model is set to relatively small data of 256 (pixels) × 256 (pixels), for example. Note that image data processed by this machine learning model may be data of another size, for example, 128 (pixels) × 128 (pixels). Image data (for example, original image data and marked image data) processed by a machine learning model is segmented so that the data matches the size of 256 (pixels) × 256 (pixels), for example. That is, "tiling processing" is performed on image data processed by a machine learning model.

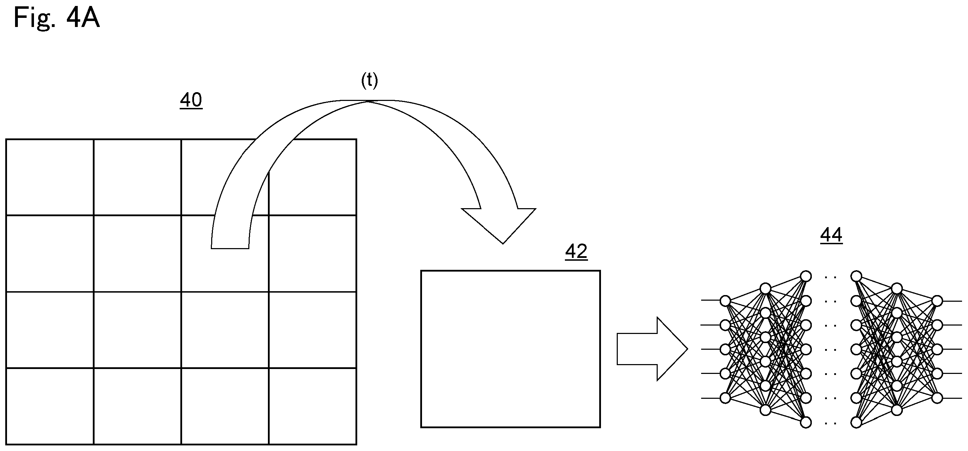

Fig. 4A is a diagram schematically illustrating tiling processing and processing of applying a machine learning model for defect detection in the defect detection system according to the present embodiment. Tiling processing (t) is performed on , for example, image data 40 of 1300 pixels × 1300 pixels to obtain segmented image data 42. At the time of learning, the tiling processing (t) is performed on original image data and marked image data. Learning of a machine learning model 44 is performed with segmented teaching data (segmented image data 42). That is, a correspondence relationship between original image data and marked image data is learned for each tiled segmented image.

Furthermore, as will be described later, the tiling processing is also performed on image data as a prediction target at the time of prediction in accordance with the time of learning.

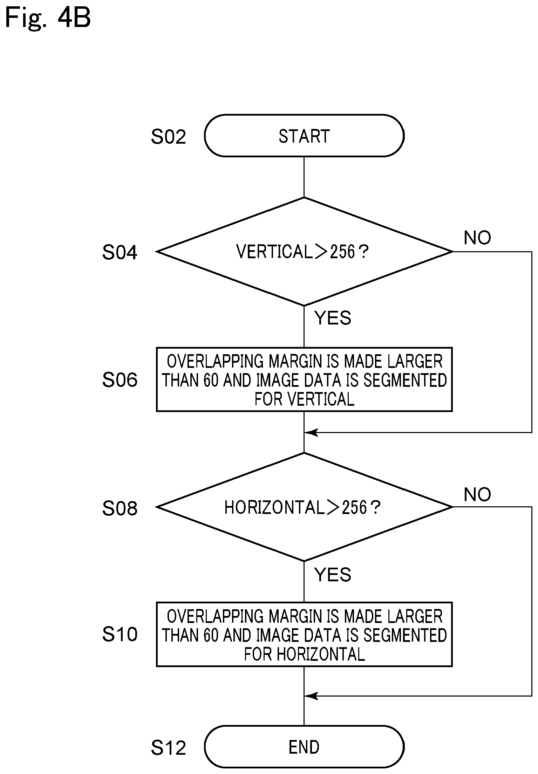

Fig. 4B is a flowchart illustrating segmentation processing of image data in the tiling processing in the defect detection system according to the present embodiment. Here, image data processed by a machine learning model is assumed to be image data of 256 (pixels) × 256 (pixels).

In the segmentation processing illustrated in Fig. 4B, first, it is checked whether image data in a vertical direction is larger than 256 pixels (Step S04). If the image data in the vertical direction is 256 pixels or less, the processing proceeds to a next step (Step S08 and subsequent steps).

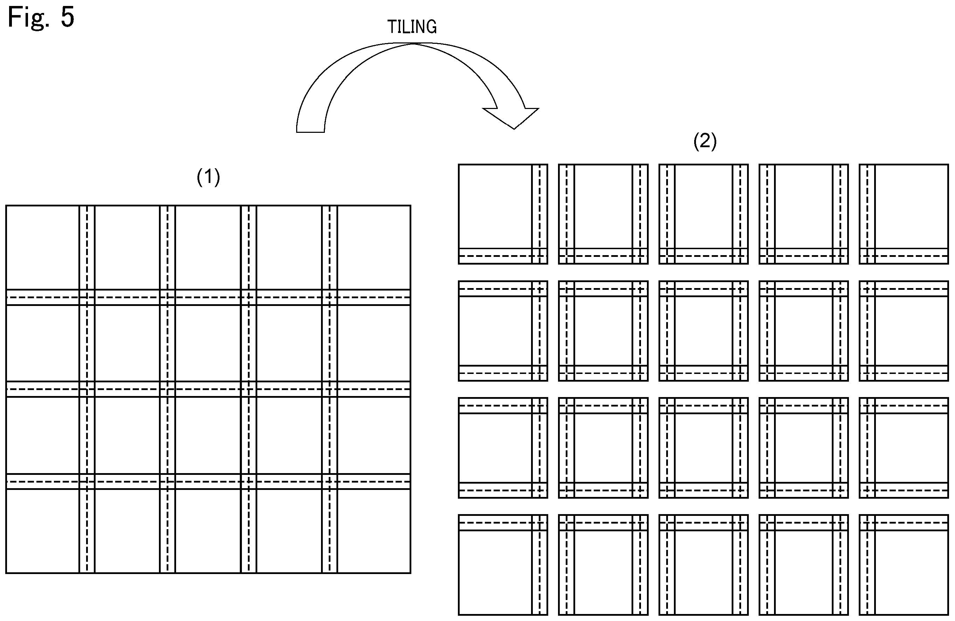

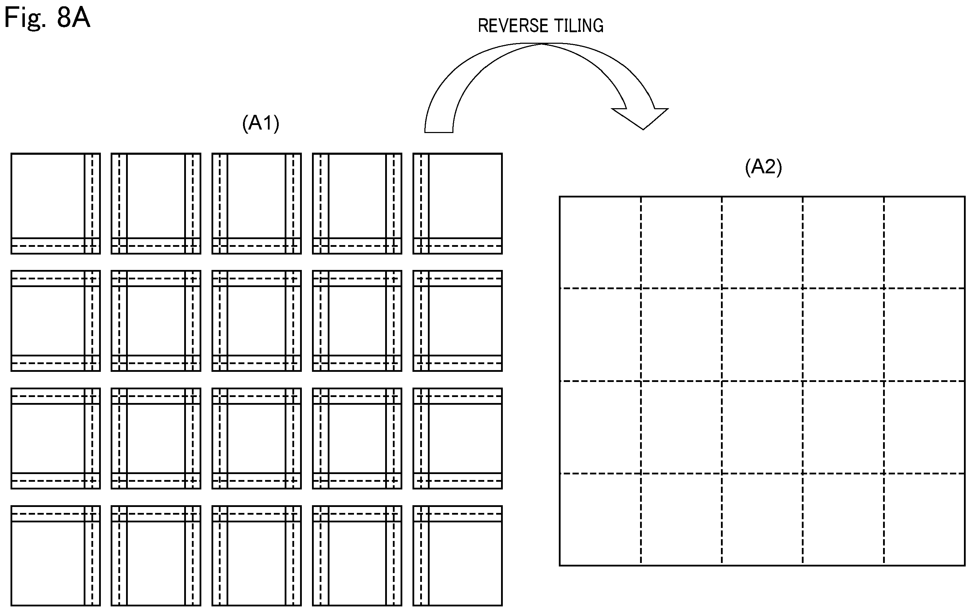

When the image data in the vertical direction is larger than 256 pixels, an overlapping margin is made larger than 60 pixels, for example, and the image data is segmented for the vertical direction (Step S06). The "overlapping margin" will be described later with reference to Figs. 5 and 8A.

Next, it is checked whether the image data in a horizontal direction is larger than 256 pixels (Step S08). If the image data in the horizontal direction is 256 pixels or less, the processing proceeds to end (Step S12).

When the image data in the horizontal direction is larger than 256 pixels, an overlapping margin is made larger than 60 pixels, for example, and the image data is segmented for the horizontal direction (Step S06).

By segmentation in the vertical and horizontal direction, generated image data is used as segmented image data for processing of a machine learning model.

### 2.2.2.1. Regarding overlap in tiling

As will be described later, the defect detection system according to the present embodiment uses a Fully Convolutional Neural Network as a machine learning model. In such a defect detection system according to the present embodiment, the present inventor has grasped that a learned machine learning model tends to cause erroneous detection including excessive detection of defects at the time of prediction (that is, at the time of detection), particularly at edge portions of segmented image data. The present inventor assumes that this is because a learned machine learning model may regard an edge portion itself of image data as a defect represented by some contour or region.

In order to prevent such erroneous detection, in the present embodiment, overlapping is employed in the tiling processing as described below.
(a) First, a temporarily segmented range is created.
(b) Main segmentation is performed in a range slightly larger than the temporarily segmented range.

Here, since "main segmentation in a slightly larger range" is performed for both adjacent segmentation ranges (images) sandwiching a temporary segmentation line, overlapping margins that overlap occur at edge portions of both of the adjacent segmented images.

Fig. 5 is a diagram schematically illustrating the tiling processing including generation of overlapping margins. In Fig. 5(1), a dotted line indicates a temporary segmentation line. If main segmentation is performed in a range slightly larger than a temporarily segmented range, segmented image data illustrated in Fig. 5(2) is generated. Edge portions in the segmented image data illustrated in Fig. 5(2) are margin portions overlapping adjacent pieces of segmented image data.

At the time of learning, image data is segmented into portions as illustrated in Fig. 5(2) and used as teaching data.

At the time of prediction (at the time of detection), image data is segmented into portions as illustrated in Fig. 5(2) and input to a learned machine learning model. Furthermore, prediction data (detection data) output from the learned machine learning model is combined by being subjected to reverse tiling processing as illustrated in Fig. 8A(A1) and Fig. 8A(A2). At this time, a portion of a half, of an overlapping margin portion, closer to the edge side (that is, an outer half) is ignored. This portion of an outer half of an overlapping margin portion is ignored, so that erroneous detection described above is prevented.

In the present embodiment, the tiling processing and the reverse tiling processing in the defect detection system are controlled so that the segmented image data illustrated in Fig. 5(2) and Fig. 8A(A1) has, for example, 256 pixels × 256 pixels, and an overlapping margin portion in the segmented image data has at least about 60 pixels to 80 pixels.

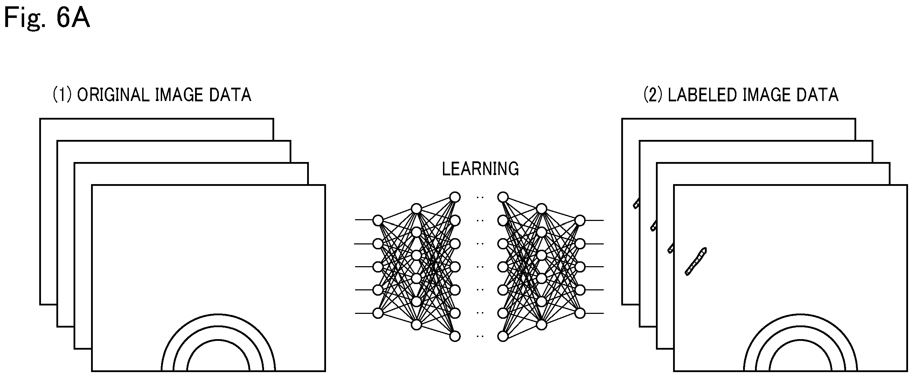

Fig. 6A is a diagram schematically illustrating a state in which a correspondence relationship between (1) original image data and (2) labeled image data (that is, marked image data) is learned in a network structure. For each tiled partial image, a correspondence relationship between a colored portion and a non-colored portion is learned by a network structure according to a machine learning model. That is, a correspondence relationship between original image data and marked image data is learned for each tiled segmented image.

A network structure according to a machine learning model configured in the defect detection system according to the present embodiment will be described. A network according to a machine learning model of the present embodiment may be realized by, for example, a structure of a fully convolutional neural network (FCNN) including all of U-net, Res-net, skipped connection, batch normalization, and max pooling.

The network structure is not limited to one described above. It is assumed that a convolutional neural network (CNN) having image data as input and image data as an output is essential, and examples of this include an auto encoder.

Further, size of an input image is usually fixed in a CNN, but input image size is not limited in an FCNN. If a configuration for resizing size of an input image is provided, a network according to a machine learning model of the present embodiment can be realized by a CNN.

### 2.2.2.2. Regarding hybrid learning of non-defective product learning and defective product learning in learning phase

In a learning phase of the defect detection system according to the present embodiment, hybrid learning of non-defective product learning and defective product learning is also intended. Note that, even if hybrid learning of non-defective product learning and defective product learning described below is not performed, the defect detection system according to the present embodiment can detect a defined defect as described in the present description.

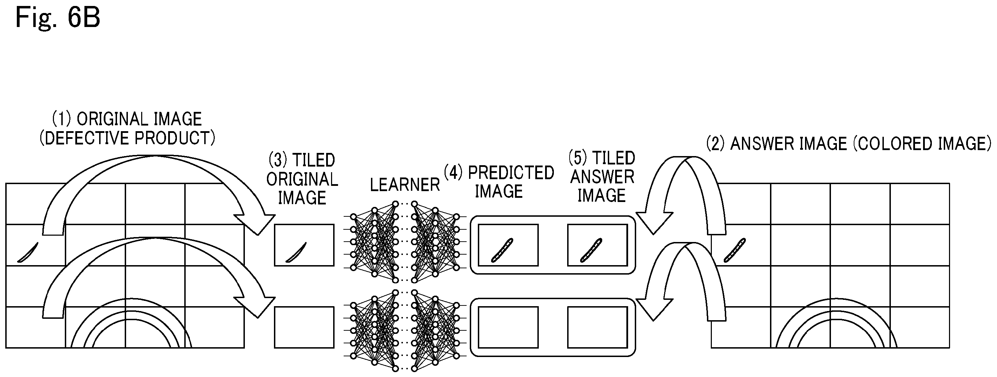

First, Fig. 6B is a diagram schematically illustrating a state in which a correspondence relationship between (1) original image data and (2) answer image (teaching image) data is learned in a network structure, and is the schematic diagram particularly related to learning of a defective product image. A correspondence relationship between (3) a region including a defect and (5) a region applied with an individual color as a defect (fault) is learned in the above-described network structure, with respect to each region which is a tiled original image.

Furthermore, a correspondence relationship between (3) a region not including a defect and (5) a region not colored as a non-defective product is similarly learned in the above-described network structure with respect to each region which is a tiled original image.

That is, with respect to an individual tiling region in an original image including a defect (fault), a region not including a defective portion is learned as teaching data of a non-defective product in a network structure. At this time, learning is performed so that a difference between a region of an original image and a region of a teaching image (answer image) becomes zero (that is, the regions become the same image region). That is, identity mapping is learned for a region not including a defective portion with respect to an individual tiling region.

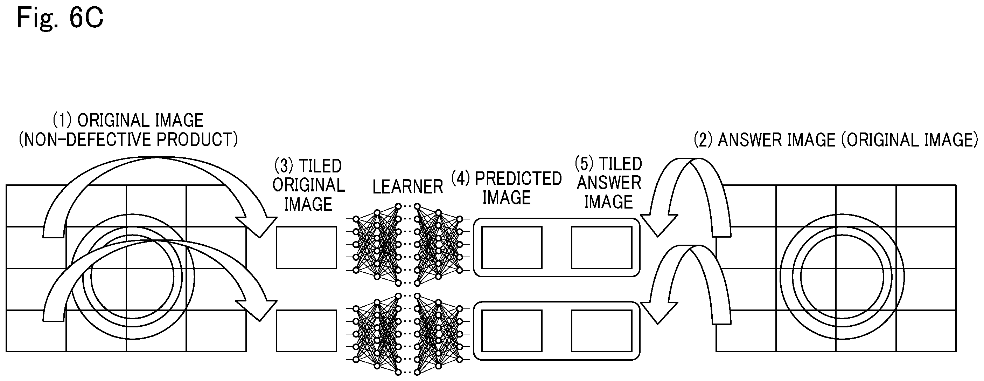

Next, Fig. 6C is a diagram schematically illustrating a state in which a correspondence relationship between (1) original image data and (2) answer image (teaching image) data is learned in a network structure, and is a schematic diagram particularly related to learning of a non-defective product image. A correspondence relationship between (3) a region not including a defect and (5) a region not colored as a non-defective product is learned in the above-described neural network structure with respect to each region which is a tiled original image. At this time, since the original image does not include a defect (fault), the network structure is learned in with non-defective teaching data for all individual tiling regions. At this time as well, learning is performed so that a difference between a region of an original image and a region of a teaching image (answer image) becomes zero (that is, the regions become the same image region). That is, since all regions of tiling do not include a defective portion, identity mapping is learned for all the regions of tiling.

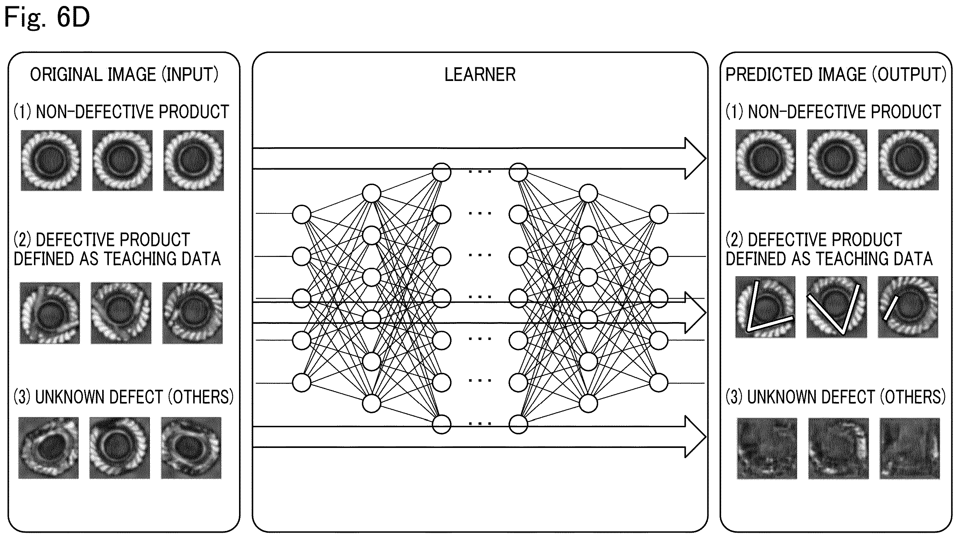

As described above with reference to Fig. 6B and Fig. 6C, the defect detection system according to the present embodiment also intends hybrid learning of non-defective product learning and defective product learning. Fig. 6D shows output examples of a learned model for each piece of image data of a non-defective product, a defined defect, and an unknown defect. In a case where an original image is of (1) a non-defective product, non-defective product learning by identity mapping is performed. By the non-defective product learning, an (2) output image with respect to an input image that is a non-defective product image has substantially no difference from the input image as illustrated in an upper portion in the right part of Fig. 6D.

In a case where an original image includes (1) a defect (fault) defined by coloring, learning based on teaching data obtained by applying a predetermined color to a predetermined defect (fault), that is, defective product learning is performed. By the defective product learning, (2) an output image with respect to an input image which is a defective product image is labeled with a defined color as illustrated in a middle portion in the right part of Fig. 6D. In an output image in a middle portion in the right part of Fig. 6D, white labeling is applied.

When such hybrid type learning of non-defective product learning and defective product learning is performed on a network structure, (2) an output image with respect to an input image including an unknown defect (fault) other than a defect defined by coloring becomes an image represented by an exceptional color, which is neither by identity mapping nor labeled with a defined color, as illustrated in a lower portion in the right part of Fig. 6D. This image is a blurred image as a whole.

### 2.2.3. [Prediction phase]

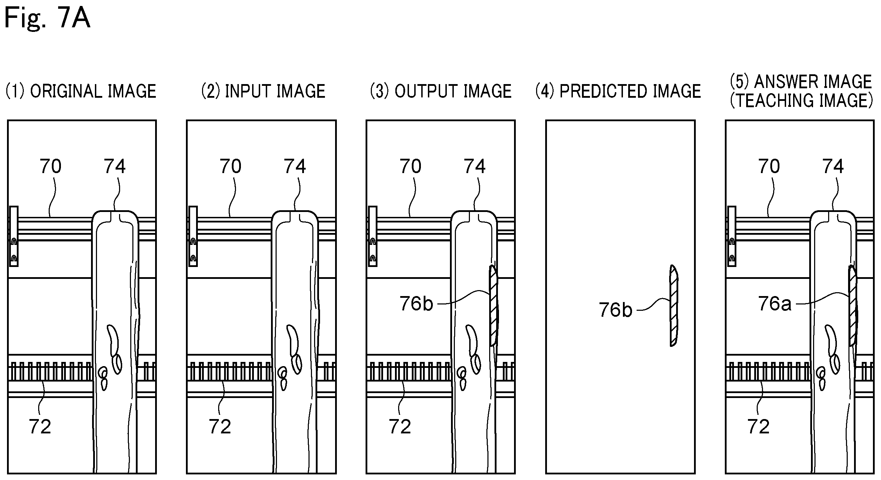

First, Fig. 7A is a diagram illustrating a series of examples of (1) original image data, (2) input image data, (3) output image data, (4) predicted image data, and (5) answer image (teaching image) data in a machine learning model of the present embodiment. These pieces of image data are all segmented image data obtained by the tiling processing, and have, for example, 256 pixels × 256 pixels.

As illustrated in the original image data of Fig. 7A(1), this piece of image data is obtained by imaging an aluminum ingot 74 on a manufacturing line 70 from above, for example. The aluminum ingot 74 moves left and right by a chain 72 provided on an upper surface of the manufacturing line 70.

As illustrated in Fig. 7A, in a case where Fig. 7A(1) is original image data, a teaching image (answer image) corresponding to the original image data is illustrated in Fig. 7A(5). That is, Figs. 7A(1) and 7A(5) are examples of teaching data for a machine learning model. In the answer image data of Fig. 7A(5), a marking 76a is applied to a defective portion.

Fig. 7A(2) is input image data for a learned machine learning model, and Fig. 7A(3) is output image data of a learned machine learning model when the input image data of Fig. 7A(2) is input. In the output image data of Fig. 7A(3), labeling 76b is applied to a defective portion.

Fig. 7A(4) illustrates predicted image data of a defect. The predicted image data is roughly obtained by an equation below. $\left[\left(4\right) Predicted image data\right] = \left[\left(3\right) Output image data\right] - \left[\left(2\right) Input image data\right]$

In the predicted image data of Fig. 7A(4), only a color indicating a defect, that is, the labeling 76b is illustrated.

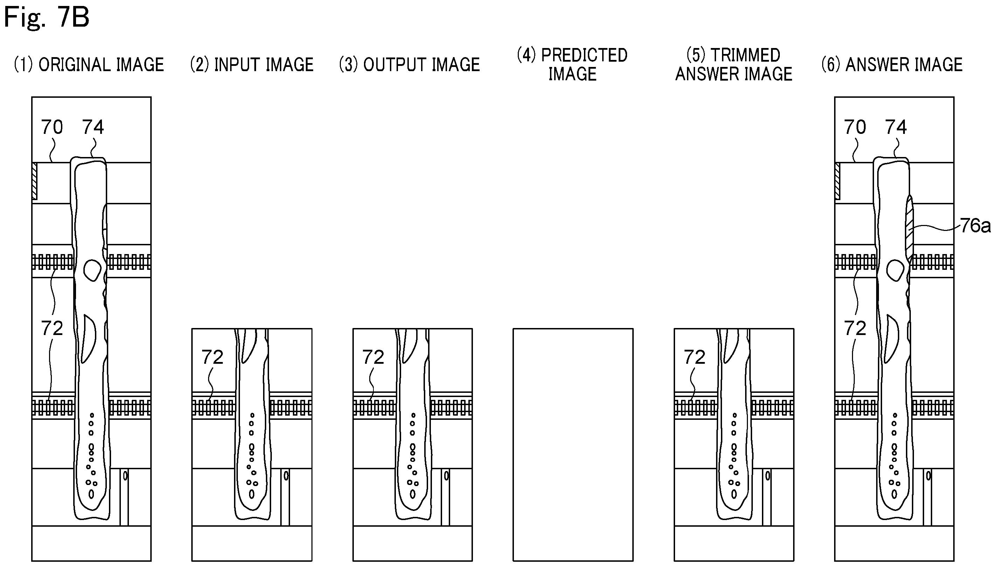

Next, Fig. 7B is a diagram particularly illustrating a lower half not including a defective portion in a series of examples of (1) original image data, (2) input image data, (3) output image data, (4) predicted image data, (5) trimmed answer image (teaching image) data, and (6) answer image (teaching image) data in a machine learning model of the present embodiment. As shown in the original image data of Fig. 7B(1), this piece of image data is also obtained by imaging the aluminum ingot 74 on the manufacturing line 70 from above, for example. The aluminum ingot 74 moves left and right by a chain 72 provided on an upper surface of the manufacturing line 70.

As illustrated in Fig. 7B, in a case where Fig. 7B(1) is original image data, teaching image (answer image) corresponding to the original image data is illustrated in Fig. 7B(6), and similarly, a teaching image (answer image) (trimmed in a lower half) corresponding to the original image data is illustrated in Fig. 7B(5). That is, Figs. 7B(1), 7B(5), and 7B(6) are examples of teaching data for a machine learning model. In the answer image data of Fig. 7B(6), the marking 76a is applied to a defective portion. On the other hand, identity mapping data is used at the time of learning as the trimmed answer image data of Fig. 7B(5).

Fig. 7B(2) is input image data for a learned machine learning model, and is image data of only a lower half. Fig. 7B(3) is output image data of a learned machine learning model when input image data of Fig. 7B(2) is input. The output image data of Fig. 7B(3) does not include the labeling 76b indicating a defective portion.

Fig. 7B(4) illustrates predicted image data of a defect. The predicted image data is also obtained by an equation below. $\left[\left(4\right) Predicted image data\right] = \left[\left(3\right) Output image data\right] - \left[\left(2\right) Input image data\right]$

Nothing is shown in the predicted image data of Fig. 7B(4).

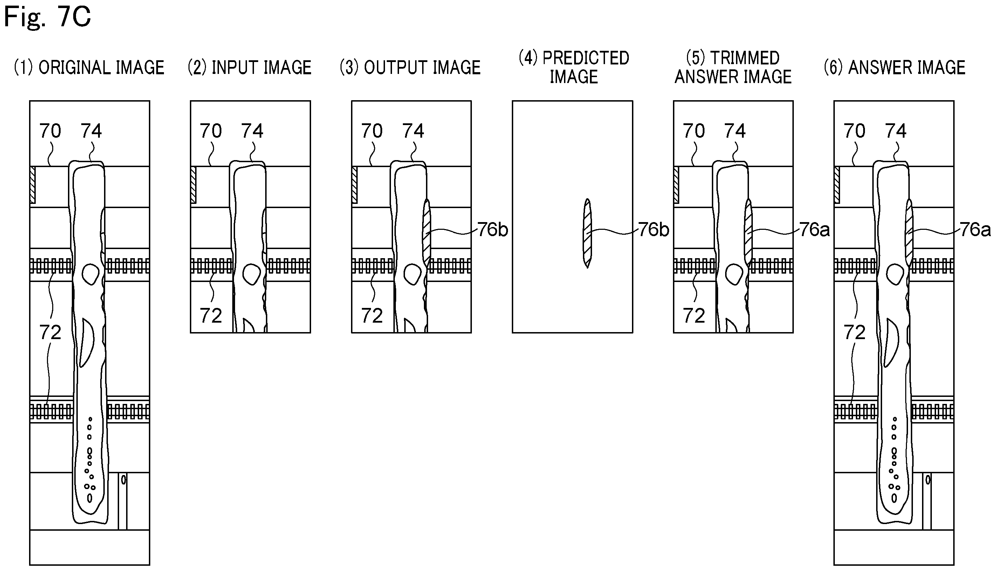

Furthermore, Fig. 7C is a diagram particularly illustrating an upper half including a defective portion in a series of examples of (1) original image data, (2) input image data, (3) output image data, (4) predicted image data, (5) trimmed answer image (teaching image) data, and (6) answer image (teaching image) data in a machine learning model of the present embodiment. As shown in the original image data of Fig. 7C(1), this piece of image data is also obtained by imaging the aluminum ingot 74 on the manufacturing line 70 from above.

As illustrated in Fig. 7C, in a case where Fig. 7C(1) is original image data, teaching image (answer image) corresponding to the original image data is illustrated in Fig. 7C(6), and similarly, a teaching image (answer image) (trimmed in an upper half) corresponding to the original image data is illustrated in Fig. 7C(5). That is, Figs. 7C(1), 7C(5), and 7C(6) are examples of teaching data for a machine learning model. In the answer image data of Fig. 7C(6), the marking 76a is applied to a defective portion. Similarly, also in the trimmed answer image data of Fig. 7C(5), the marking 76a is applied to a defective portion.

Fig. 7C(2) is input image data for a learned machine learning model, and is image data of only an upper half. Fig. 7C(3) is output image data of a learned machine learning model when input image data of Fig. 7C(2) is input. In the output image data of Fig. 7C(3), the labeling 76b is applied to a defective portion.

Fig. 7C(4) illustrates predicted image data of a defect. The predicted image data is also obtained by an equation below. $\left[\left(4\right) Predicted image data\right] = \left[\left(3\right) Output image data\right] - \left[\left(2\right) Input image data\right]$

In the predicted image data of Fig. 7C(4), only a color indicating a defect, that is, the labeling 76b is illustrated.

### 2.2.4. [Post-processing and detection phase]

Fig. 8A is a diagram schematically illustrating reverse tiling processing. Predicted image data (see Fig. 7(4)), which is segmented image data, is subjected to the reverse tiling processing, and is combined to size of original image data.

As described above, in the reverse tiling processing, predicted image data is combined as illustrated in Fig. 8A(A1) and Fig. 8A(A2). In each piece of segmented image data, there is a margin overlapping an adjacent piece of segmented image data.

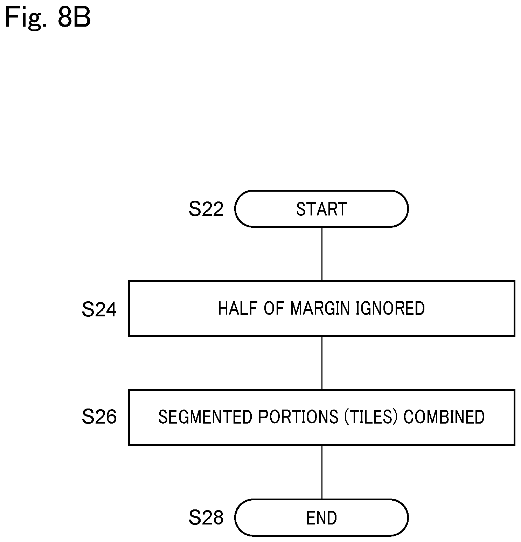

Fig. 8B is a flowchart illustrating the reverse tiling processing. In each piece of segmented image data, a portion of an outer half of an overlapping margin portion is ignored (Step S24). Then, the segmented image data is combined (Step S26). In this way, portions of outer halves of overlapping margin portions are ignored, which leads to prevention of erroneous detection of defect(s).

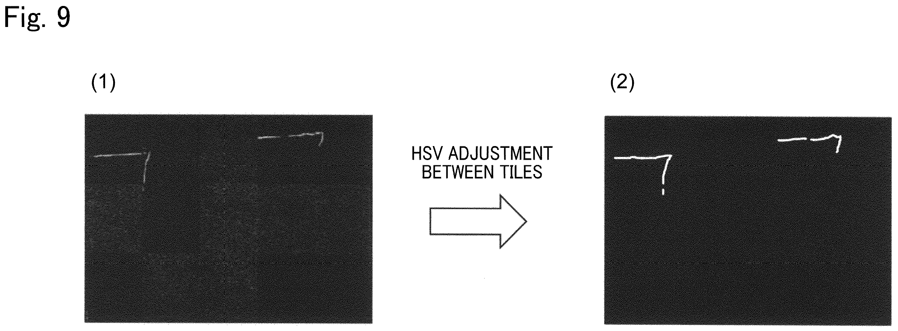

Next, in Fig. 9, Fig. 9(1) is an example of predicted image data returned to original size by the reverse tiling processing. Fig. 9(2) is an example of detection image data generated by adjusting hue, saturation, and brightness (HSV) between individual original tiles in the predicted image data returned to the original size illustrated in Fig. 9(1).

As illustrated in Fig. 9(1), in predicted image data returned to original size by the reverse tiling processing, hue, saturation, and brightness (HSV) may slightly deviate between pieces of individual segmented image data. In view of the above, hue, saturation, and brightness (HSV) are desirably adjusted between individual (original) tiles. Here, hue, saturation, and brightness (HSV) are desirably adjusted based on a predetermined color for each type of defect.

It is assumed that the predicted image data illustrated in Fig. 9(1) includes several "flaws". In the predicted image data, as described above, for example, "red" which is a predetermined color is applied as a label to a "flaw" portion. Therefore, hue, saturation, and brightness are adjusted based on the color of "red" representing "flaw", which is one of types of defects. Fig. 9(2) is an example of detection image data after adjustment. If the predicted image data illustrated in Fig. 9(1) includes a portion of another defect, hue, saturation, and brightness are further adjusted based on a predetermined color corresponding to a type of the defect, for example, "yellow", "orange", "green", "blue", "purple", and the like, and detection image data after further adjustment is created.

As illustrated in Fig. 9(2), a detection image is an image based on black in which a defect is highlighted by labeling. In view of the above, the processing circuit 8 of the defect detection system according to the present embodiment detects pixels deviating from the average pixel in the detection image as defect(s). That is, for example, the processing circuit 8 obtains the average value and the standard deviation for all the pixels of a detection image, further obtains pixels that are away from the average value by the standard deviation or more, and detects portion(s) including such pixels as defect(s).

In the present embodiment, as illustrated in the table of Fig. 2, a color (that is, a color of labeling) applied to a defective portion of output image data can be changed according to a type of defect of the defective portion in input image data. Therefore, a type of defect, a size of defect, and a position of defect in a product may be grasped by hue, an area, and coordinates of labeling of a detected defect. In particular, since a correspondence relationship between a type of defect and a predetermined color is held by the table illustrated in Fig. 2, a defect is clearly and easily classified.

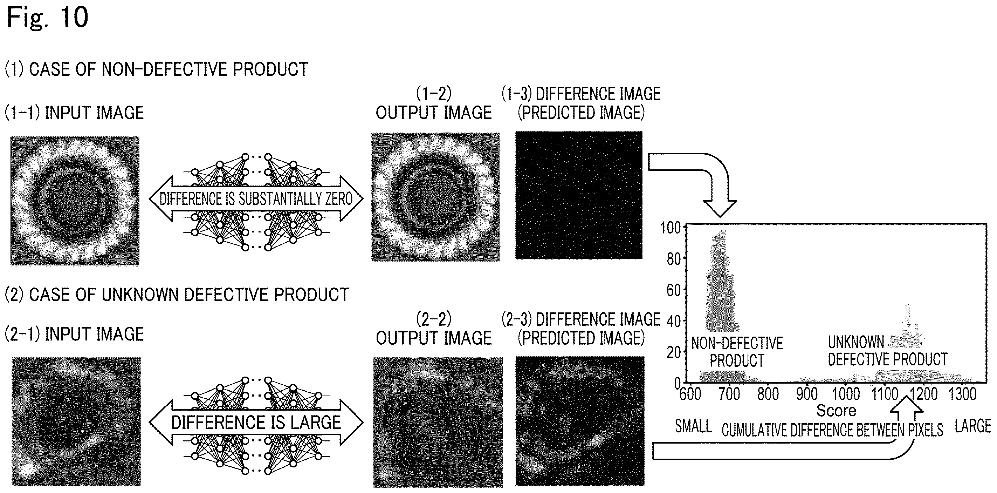

Next, Fig. 10 is a diagram that illustrates processing for detecting a non-defective product and processing for detecting an unknown defective (faulty) product. (1) In a case of a non-defective product, a difference between an (1-1) input image and an (1-2) output image is substantially zero. That is, nothing appears in a (1-3) difference image (predicted image).

On the other hand, (2) in a case of an unknown defective product, a cumulative difference between pixels in a (2-3) difference image (predicted image), which is a difference between an (2-1) input image and an (2-2) output image, becomes large. In view of the above, in a predicted image (difference image) including a portion of an exceptional color, a portion where a cumulative difference between pixels is larger than a given threshold is detected as an unknown defective (faulty) portion.

Detection of a non-defective product, detection of a defined defective product, and detection of an unknown defect in the defect detection system according to the present embodiment are summarized as in Fig. 6D described above. That is, a non-defective product is determined based on the fact that a cumulative difference between pixels is substantially zero. A defect (fault) defined as a teaching image is determined based on a relationship between a defined defect (fault) and a color that is labeling. An unknown defect, including a portion of an exceptional color, other than a defined defect, is determined based on the fact that a cumulative difference between pixels exceeds a given threshold. Furthermore, priority order of detection is [1] non-defective product → [2] defined defect → [3] unknown defect.

### 2.3. [Summary of embodiment]

The defect detection method according to the present embodiment includes steps of; applying, by the processing circuit 8, a predetermined color for each type of defect to a defective portion having a contour shape and a defective portion having a region shape that may be present in an inspection target object in an original image obtained by imaging of the inspection target object; preparing one or more sets of first teaching data by the processing circuit 8 using, as the first teaching data, original image data obtained by imaging of the inspection target object and having a defect and marked image data obtained by labeling with a predetermined color for each type of defect on the original image data in the step of applying a predetermined color; preparing one or more sets of second teaching data by the processing circuit 8 using, as the second teaching data, original image data obtained by imaging of the inspection target object and having no defect and identity mapping data having no difference from the original image data; and preparing a learned machine learning model by the processing circuit 8 performing learning using the first teaching data and the second teaching data. **In** the step of preparing a learned machine learning model, tiling processing is performed on the original image data and the marked image data in the first teaching data to obtain segmented images, and then learning of a correspondence relationship between the original image data and the marked image data is performed for each tiled segmented image, tiling processing is similarly performed on the original image data and the identity mapping data in the second teaching data to obtain segmented images, and then learning of a correspondence relationship between the original image data and the identity mapping data is performed for each tiled segmented image, in both types of the tiling processing, segmented images are created such that, after tiling, both edge portions of adjacent segmented images overlap, and further, in a case where a marked image data as a segmented image in the first teaching data does not include a marking portion, learning of a correspondence relationship between original image data as the segmented image and identity mapping data of the original image data is performed. The defect detection method further includes steps of; acquiring, by the processing circuit 8, image data of an inspection target object output by a learned machine learning model prepared as described above by inputting image data of the inspection target object to the machine learning model, the input image data having been subjected to the tiling processing; acquiring predicted image data by the processing circuit 8 subtracting input image data from output image data; and performing reverse tiling processing, by the processing circuit 8, on the predicted image data, the reverse tiling processing performing combination by ignoring a portion of an outer half of an overlapping edge portion in each piece of the predicted image data before combination.

In the defect detection method according to the present embodiment, various defects in various products can be accurately, completely, and efficiently detected. In particular, the defect detection method according to the present embodiment can detect and classify a non-defective product, a defective product including a known defect, and a defective product including an unknown defect.

### 3. [Other embodiments]

As described above, the embodiment is described as an example of the technique disclosed in the present application. However, the technique in the present disclosure is not limited to this, and is applicable to an embodiment in which changes, replacements, additions, omissions, and the like are appropriately made.

In the above-described embodiment, as an imaging device, an imaging device (for example, an optical camera) that images a product being manufactured moving on a manufacturing line from a portion above the manufacturing line of the product and an X-ray imaging device are employed. The imaging device is not limited to these, and the defect detection method and the defect detection system of the present disclosure can be realized by optional imaging devices including an imaging device using a scanner camera or a line sensor camera, an imaging device using a laser sensor, and/or an imaging device utilizing a rotating table.

Further, for example, in the post-processing and detection phase in the above-described embodiment, the processing circuit 8 obtains an average value and a standard deviation for all pixels of a detection image, further obtains pixels away from the average value by the standard deviation or more, and detects portions including the pixels as defect(s). However, the processing circuit 8 may obtain pixels away from the average value by a value of 1/2 of the standard deviation or more, and detect portions including the pixels as defect(s), or may obtain pixels away from the average value by a value 1.5 times the standard deviation or more, and detect portions including the pixels as defect(s).

Further, in a case where a certain type of unknown defect is detected a plurality of times, the unknown defect can be defined as a known defect (for example, a peeling defect or the like). Relearning of a machine learning model can be performed using original image data of a known defect (fault) newly defined as described above and new marked image data in which a new color is added (applied) to a newly defined defective (faulty) portion in the original image as additional teaching data. By performing relearning in this manner, a machine learning model can detect and classify the certain type of unknown defect as a known defect.

Further, the accompanying drawings and the detailed description are provided in order to describe the embodiment. Accordingly, the constituent elements described in the accompanying drawings and the detailed description may include not only a constituent element essential for solving the problem, but also a constituent element not essential for solving the problem in order to exemplify the technique. For this reason, it should not be recognized that those non-essential constituent elements are essential just because those non-essential constituent elements are described in the accompanying drawings and the detailed description.

### REFERENCE SIGNS LIST

- 2: defect detection system
- 4: computer device
- 6: interface device
- 8: processing circuit
- 10: memory
- 12: storage device
- 14: learning server
- 16: imaging device
- 18: external network
- 32: linear defective portion
- 34: fine defective portion
- 36: defective portion of a range having a certain area
- 37: contour labeling data
- 39: region labeling data
- 40: image data of 1300 pixels × 1300 pixels
- 42: segmented image data
- 44: machine learning model
- 70: manufacturing line
- 72: chain
- 74: aluminum ingot
- 76a: marking
- 76b: labeling

## Claims

1. A defect detection method comprising steps of:
applying, by a processing circuit, a predetermined color for each type of defect to a defective portion having a contour shape and a defective portion having a region shape that may be present in an inspection target object in an original image obtained by imaging of the inspection target object;
preparing one or more sets of first teaching data by the processing circuit using, as the first teaching data, original image data obtained by imaging of the inspection target object and having a defect and marked image data obtained by labeling with a predetermined color for each type of defect on the original image data in the step of applying a predetermined color;
preparing one or more sets of second teaching data by the processing circuit using, as the second teaching data, original image data obtained by imaging of the inspection target object and having no defect and identity mapping data having no difference from the original image data; and
preparing a learned machine learning model by the processing circuit performing learning using the first teaching data and the second teaching data, wherein,
in the step of preparing a learned machine learning model,
tiling processing is performed on the original image data and the marked image data in the first teaching data to obtain segmented images, and then learning of a correspondence relationship between the original image data and the marked image data is performed for each tiled segmented image,
tiling processing is similarly performed on the original image data and the identity mapping data in the second teaching data to obtain segmented images, and then learning of a correspondence relationship between the original image data and the identity mapping data is performed for each tiled segmented image,
in both types of the tiling processing, segmented images are created such that, after tiling, both edge portions of adjacent segmented images overlap, and
further,
in a case where a marked image data as a segmented image in the first teaching data does not include a marking portion, learning of a correspondence relationship between original image data as the segmented image and identity mapping data of the original image data is performed.

2. The defect detection method according to claim 1, wherein
the machine learning model includes a convolutional neural network (CNN) or a fully convolutional neural network (FCNN).

3. A defect detection method comprising steps of:
acquiring, by the processing circuit, image data of an inspection target object output by a learned machine learning model prepared by the defect detection method according to claim 1 or 2 by inputting image data of the inspection target object to the machine learning model, the input image data having been subjected to the tiling processing;
acquiring predicted image data by the processing circuit subtracting input image data from output image data; and
performing reverse tiling processing, by the processing circuit, on the predicted image data, the reverse tiling processing performing combination by ignoring a portion of an outer half of an overlapping edge portion in each piece of the predicted image data before combination.

4. The defect detection method according to claim 3, wherein
in the step of performing the reverse tiling processing, hue, saturation, and brightness are adjusted based on a predetermined color for each type of defect between a plurality of pieces of the predicted image data before combination.

5. The defect detection method according to claim 4, further comprising a step of:
detecting and classifying, by the processing circuit, a defect in the image data of the inspection target object according to a deviation situation, from an average pixel of the predicted image data, of a portion of the predetermined color included in the predicted image data.

6. The defect detection method according to claim 4, further comprising a step of:
in a case where the predicted image data includes a portion of an exceptional color that is not any of the predetermined colors, detecting and classifying, by the processing circuit, a defect that is not any of the types of defects according to an accumulation situation of pixel values for the portion of the exceptional color.

7. A defect detection method comprising steps of:
preparing a learned machine learning model by a processing circuit performing learning using, as teaching data, original image data obtained by imaging of an inspection target object and marked image data in which a defective portion having a contour shape and a defective portion having a region shape that may be present in the inspection target object are labeled with a predetermined color for each type of defect, wherein tiling processing is performed on the original image data and the marked image data to obtain segmented images, learning of a correspondence relationship between the original image data and the marked image data is performed for each tiled segmented image, and, in the tiling processing, segmented images are created such that, after tiling, both edge portions of adjacent segmented images overlap;
acquiring, by the processing circuit, labeled image data of an inspection target object output by the learned machine learning model by inputting image data of the inspection target object to the machine learning model, the input image data having been subjected to the tiling processing;
acquiring, by the processing circuit, predicted image data showing a detection target by subtracting input image data from output labeled image data; and
performing reverse tiling processing, by the processing circuit, on the predicted image data, the reverse tiling processing performing combination by ignoring a portion of an outer half of an overlapping edge portion in each piece of the predicted image data before combination,
wherein,
in the step of performing the reverse tiling processing, hue, saturation, and brightness are adjusted based on a predetermined color for each type of defect between a plurality of pieces of the predicted image data before combination.

8. The defect detection method according to claim 7, further comprising a step of:
classifying a defect in the image data of the inspection target object according to the predetermined color included in the predicted image data.

9. The defect detection method according to claim 7, further comprising a step of:
in a case where the predicted image data includes a portion of a color that is not any of the predetermined colors, classifying the portion of the color as a portion in which a defect that is not any of the types of defects is detected.

10. The defect detection method according to any one of claims 7 to 9, wherein
the machine learning model includes a convolutional neural network (CNN) or a fully convolutional neural network (FCNN).

11. A computer program causing the processing circuit to execute the defect detection method according to any one of claims 1 to 10.

12. A defect detection system comprising a computer device and a storage device, wherein
the computer device performs the defect detection method according to any one of claims 1 to 10.

## Patentansprüche

1. Fehlererkennungsverfahren, umfassend die Schritte:
Anwenden, durch eine Verarbeitungsschaltung, einer vorbestimmten Farbe für jeden Fehlertyp auf einen fehlerhaften Abschnitt mit einer Konturform und einen fehlerhaften Abschnitt mit einer Bereichsform, die in einem Inspektionszielobjekt in einem durch Bildaufnahme des Inspektionszielobjekts erhaltenen Originalbild vorhanden sein können;
Erstellen eines oder mehrerer Sätze erster Lerndaten durch die Verarbeitungsschaltung unter Verwendung, als die ersten Lerndaten, von Originalbilddaten, die durch Bildaufnahme des Inspektionszielobjekts erhalten werden und einen Fehler aufweisen, und von markierten Bilddaten, die durch Kennzeichnen mit einer vorbestimmten Farbe für jeden Fehlertyp auf den Originalbilddaten in dem Schritt des Anwendens einer vorbestimmten Farbe erhalten werden;
Erstellen eines oder mehrerer Sätze zweiter Lerndaten durch die Verarbeitungsschaltung unter Verwendung, als die zweiten Lerndaten, von Originalbilddaten, die durch Bildaufnahme des Inspektionszielobjekts erhalten werden und keinen Fehler aufweisen, und von Identitätsabbildungsdaten, die keinen Unterschied zu den Originalbilddaten aufweisen; und
Erstellen eines gelernten Maschinenlernmodells durch die Verarbeitungsschaltung, die ein Lernen unter Verwendung der ersten Lerndaten und der zweiten Lerndaten durchführt,
wobei,
in dem Schritt des Erstellens eines gelernten Maschinenlernmodells,
eine Kachelverarbeitung an den Originalbilddaten und den markierten Bilddaten in den ersten Lerndaten durchgeführt wird, um segmentierte Bilder zu erhalten, und anschließend das Lernen einer Korrespondenzbeziehung zwischen den Originalbilddaten und den markierten Bilddaten für jedes gekachelte segmentierte Bild durchgeführt wird,
eine Kachelverarbeitung in ähnlicher Weise an den Originalbilddaten und den Identitätsabbildungsdaten in den zweiten Lerndaten durchgeführt wird, um segmentierte Bilder zu erhalten, und anschließend das Lernen einer Korrespondenzbeziehung zwischen den Originalbilddaten und den Identitätsabbildungsdaten für jedes gekachelte segmentierte Bild durchgeführt wird,
bei beiden Arten der Kachelverarbeitung segmentierte Bilder derart erzeugt werden, dass sich nach dem Kacheln beide Randabschnitte benachbarter segmentierter Bilder überlappen, und
ferner,
in einem Fall, in dem markierte Bilddaten als ein segmentiertes Bild in den ersten Lerndaten keinen Markierungsabschnitt enthalten, das Lernen einer Korrespondenzbeziehung zwischen den Originalbilddaten als dem segmentierten Bild und Identitätsabbildungsdaten der Originalbilddaten durchgeführt wird.

2. Fehlererkennungsverfahren nach Anspruch 1, wobei
das Maschinenlernmodell ein faltendes neuronales Netzwerk (CNN) oder ein vollständig faltendes neuronales Netzwerk (FCNN) umfasst.

3. Fehlererkennungsverfahren, umfassend die Schritte:
Erfassen, durch die Verarbeitungsschaltung, von Bilddaten eines Inspektionszielobjekts, die von einem durch das Fehlererkennungsverfahren nach Anspruch 1 oder 2 erstellten gelernten Maschinenlernmodell ausgegeben werden, indem Bilddaten des Inspektionszielobjekts in das Maschinenlernmodell eingegeben werden, wobei die Eingangsbilddaten der Kachelverarbeitung unterzogen worden sind;
Erfassen von vorhergesagten Bilddaten, indem die Verarbeitungsschaltung die Eingangsbilddaten von den Ausgangsbilddaten subtrahiert; und
Durchführen einer umgekehrten Kachelverarbeitung, durch die Verarbeitungsschaltung, an den vorhergesagten Bilddaten, wobei die umgekehrte Kachelverarbeitung eine Kombination durchführt, indem ein Abschnitt einer äußeren Hälfte eines überlappenden Randabschnitts in jedem Teil der vorhergesagten Bilddaten vor der Kombination ignoriert wird.

4. Fehlererkennungsverfahren nach Anspruch 3, wobei
in dem Schritt des Durchführens der umgekehrten Kachelverarbeitung Farbton, Sättigung und Helligkeit auf der Grundlage einer vorbestimmten Farbe für jeden Fehlertyp zwischen einer Mehrzahl von Teilen der vorhergesagten Bilddaten vor der Kombination angepasst werden.

5. Fehlererkennungsverfahren nach Anspruch 4, ferner umfassend einen Schritt:
Erkennen und Klassifizieren, durch die Verarbeitungsschaltung, eines Fehlers in den Bilddaten des Inspektionszielobjekts gemäß einer Abweichungssituation eines Abschnitts der vorbestimmten Farbe, der in den vorhergesagten Bilddaten enthalten ist, von einem durchschnittlichen Pixel der vorhergesagten Bilddaten.

6. Fehlererkennungsverfahren nach Anspruch 4, ferner umfassend einen Schritt:
in einem Fall, in dem die vorhergesagten Bilddaten einen Abschnitt einer Ausnahmefarbe enthalten, die keine der vorbestimmten Farben ist, Erkennen und Klassifizieren, durch die Verarbeitungsschaltung, eines Fehlers, der keinem der Fehlertypen entspricht, gemäß einer Akkumulationssituation von Pixelwerten für den Abschnitt der Ausnahmefarbe.

7. Fehlererkennungsverfahren, umfassend die Schritte:
Erstellen eines gelernten Maschinenlernmodells durch eine Verarbeitungsschaltung, die ein Lernen unter Verwendung, als Lerndaten, von Originalbilddaten, die durch Bildaufnahme eines Inspektionszielobjekts erhalten werden, und von markierten Bilddaten durchführt, in denen ein fehlerhafter Abschnitt mit einer Konturform und ein fehlerhafter Abschnitt mit einer Bereichsform, die in dem Inspektionszielobjekt vorhanden sein können, mit einer vorbestimmten Farbe für jeden Fehlertyp gekennzeichnet sind, wobei eine Kachelverarbeitung an den Originalbilddaten und den markierten Bilddaten durchgeführt wird, um segmentierte Bilder zu erhalten, das Lernen einer Korrespondenzbeziehung zwischen den Originalbilddaten und den markierten Bilddaten für jedes gekachelte segmentierte Bild durchgeführt wird und bei der Kachelverarbeitung segmentierte Bilder derart erzeugt werden, dass sich nach dem Kacheln beide Randabschnitte benachbarter segmentierter Bilder überlappen;
Erfassen, durch die Verarbeitungsschaltung, von gekennzeichneten Bilddaten eines Inspektionszielobjekts, die von dem gelernten Maschinenlernmodell ausgegeben werden, indem Bilddaten des Inspektionszielobjekts in das Maschinenlernmodell eingegeben werden, wobei die Eingangsbilddaten der Kachelverarbeitung unterzogen worden sind;
Erfassen, durch die Verarbeitungsschaltung, von vorhergesagten Bilddaten, die ein Erkennungsziel zeigen, durch Subtrahieren der Eingangsbilddaten von den ausgegebenen gekennzeichneten Bilddaten; und
Durchführen einer umgekehrten Kachelverarbeitung, durch die Verarbeitungsschaltung, an den vorhergesagten Bilddaten, wobei die umgekehrte Kachelverarbeitung eine Kombination durchführt, indem ein Abschnitt einer äußeren Hälfte eines überlappenden Randabschnitts in jedem Teil der vorhergesagten Bilddaten vor der Kombination ignoriert wird,
wobei,
in dem Schritt des Durchführens der umgekehrten Kachelverarbeitung Farbton, Sättigung und Helligkeit auf der Grundlage einer vorbestimmten Farbe für jeden Fehlertyp zwischen einer Mehrzahl von Teilen der vorhergesagten Bilddaten vor der Kombination angepasst werden.

8. Fehlererkennungsverfahren nach Anspruch 7, ferner umfassend einen Schritt:
Klassifizieren eines Fehlers in den Bilddaten des Inspektionszielobjekts gemäß der vorbestimmten Farbe, die in den vorhergesagten Bilddaten enthalten ist.

9. Fehlererkennungsverfahren nach Anspruch 7, ferner umfassend einen Schritt:
in einem Fall, in dem die vorhergesagten Bilddaten einen Abschnitt einer Farbe enthalten, die keine der vorbestimmten Farben ist, Klassifizieren des Abschnitts der Farbe als einen Abschnitt, in dem ein Fehler erkannt wird, der keinem der Fehlertypen entspricht.

10. Fehlererkennungsverfahren nach einem der Ansprüche 7 bis 9, wobei
das Maschinenlernmodell ein faltendes neuronales Netzwerk (CNN) oder ein vollständig faltendes neuronales Netzwerk (FCNN) umfasst.

11. Computerprogramm, das die Verarbeitungsschaltung veranlasst, das Fehlererkennungsverfahren nach einem der Ansprüche 1 bis 10 auszuführen.

12. Fehlererkennungssystem, umfassend eine Computervorrichtung und eine Speichervorrichtung, wobei
die Computervorrichtung das Fehlererkennungsverfahren nach einem der Ansprüche 1 bis 10 durchführt.

## Revendications

1. Procédé de détection de défaut comprenant les étapes consistant à :
appliquer, au moyen d'un circuit de traitement, une couleur prédéterminée pour chaque type de défaut à une portion défectueuse ayant une forme de contour et à une portion défectueuse ayant une forme de région qui peuvent être présentes dans un objet cible d'inspection dans une image originale obtenue par imagerie de l'objet cible d'inspection ;
préparer un ou plusieurs ensembles de premières données d'apprentissage au moyen du circuit de traitement en utilisant, en tant que premières données d'apprentissage, des données d'image originale obtenues par imagerie de l'objet cible d'inspection et présentant un défaut et des données d'image marquée obtenues par marquage avec une couleur prédéterminée pour chaque type de défaut sur les données d'image originale dans l'étape consistant à appliquer une couleur prédéterminée ;
préparer un ou plusieurs ensembles de secondes données d'apprentissage au moyen du circuit de traitement en utilisant, en tant que secondes données d'apprentissage, des données d'image originale obtenues par imagerie de l'objet cible d'inspection et ne présentant aucun défaut et des données de mappage d'identité ne présentant aucune différence par rapport aux données d'image originale ; et
préparer un modèle d'apprentissage automatique entraîné au moyen du circuit de traitement effectuant un apprentissage automatique en utilisant les premières données d'apprentissage et les secondes données d'apprentissage,
dans lequel,
dans l'étape de préparation d'un modèle d'apprentissage automatique entraîné,
un traitement de pavage est effectué sur les données d'image originale et les données d'image marquée dans les premières données d'apprentissage afin d'obtenir des images segmentées et puis l'apprentissage d'une relation de correspondance entre les données d'image originale et les données d'image marquée est effectué pour chaque image segmentée pavée,
un traitement de pavage est effectué de manière similaire sur les données d'image originale et les données de mappage d'identité dans les secondes données d'apprentissage afin d'obtenir des images segmentées et puis l'apprentissage d'une relation de correspondance entre les données d'image originale et les données de mappage d'identité est effectué pour chaque image segmentée pavée,
dans les deux types de traitement de pavage, des images segmentées sont créées de telle sorte que, après le pavage, les portions de bord d'images segmentées adjacentes se chevauchent, et
en outre,
dans un cas où des données d'image marquée en tant qu'image segmentée dans les premières données d'apprentissage ne comprennent pas de portion de marquage, l'apprentissage d'une relation de correspondance entre les données d'image originale en tant qu'image segmentée et les données de mappage d'identité des données d'image originale est effectué.

2. Procédé de détection de défaut selon la revendication 1, dans lequel
le modèle d'apprentissage automatique comprend un réseau neuronal convolutif (CNN) ou un réseau entièrement convolutif (FCNN).

3. Procédé de détection de défaut comprenant les étapes consistant à :
acquérir, au moyen du circuit de traitement, des données d'image d'un objet cible d'inspection produites par un modèle d'apprentissage automatique entraîné préparé par le procédé de détection de défaut selon la revendication 1 ou 2 en introduisant des données d'image de l'objet cible d'inspection dans le modèle d'apprentissage automatique, les données d'image d'entrée ayant été soumises au traitement de pavage ;
acquérir des données d'image prédites au moyen du circuit de traitement en soustrayant les données d'image d'entrée des données d'image de sortie ; et
effectuer un traitement de pavage inverse, au moyen du circuit de traitement, sur les données d'image prédites, le traitement de pavage inverse effectuant une combinaison en ignorant une portion d'une moitié extérieure d'une portion de bord se chevauchant dans chaque partie des données d'image prédites avant la combinaison.

4. Procédé de détection de défaut selon la revendication 3, dans lequel
dans l'étape consistant à effectuer le traitement de pavage inverse, la teinte, la saturation et la luminosité sont ajustées sur la base d'une couleur prédéterminée pour chaque type de défaut entre une pluralité de parties des données d'image prédites avant la combinaison.

5. Procédé de détection de défaut selon la revendication 4, comprenant en outre une étape consistant à :
détecter et classifier, au moyen du circuit de traitement, un défaut dans les données d'image de l'objet cible d'inspection selon une situation d'écart, par rapport à un pixel moyen des données d'image prédites, d'une portion de la couleur prédéterminée comprise dans les données d'image prédites.

6. Procédé de détection de défaut selon la revendication 4, comprenant en outre une étape consistant à :
dans un cas où les données d'image prédites comprennent une portion d'une couleur exceptionnelle qui n'est aucune des couleurs prédéterminées, détecter et classifier, au moyen du circuit de traitement, un défaut qui n'est aucun des types de défauts selon une situation d'accumulation de valeurs de pixels pour la portion de la couleur exceptionnelle.

7. Procédé de détection de défaut comprenant les étapes consistant à :
préparer un modèle d'apprentissage automatique entraîné au moyen d'un circuit de traitement effectuant un apprentissage en utilisant, en tant que données d'apprentissage, des données d'image originale obtenues par imagerie d'un objet cible d'inspection et des données d'image marquée dans lesquelles une portion défectueuse ayant une forme de contour et une portion défectueuse ayant une forme de région qui peuvent être présentes dans l'objet cible d'inspection sont marquées avec une couleur prédéterminée pour chaque type de défaut, dans lequel un traitement de pavage est effectué sur les données d'image originale et les données d'image marquée afin d'obtenir des images segmentées, l'apprentissage d'une relation de correspondance entre les données d'image originale et les données d'image marquée est effectué pour chaque image segmentée pavée, et, dans le traitement de pavage, des images segmentées sont créées de telle sorte que, après le pavage, les deux portions de bord d'images segmentées adjacentes se chevauchent ;
acquérir, au moyen du circuit de traitement, des données d'image étiquetée d'un objet cible d'inspection produites par le modèle d'apprentissage automatique entraîné en introduisant des données d'image de l'objet cible d'inspection dans le modèle d'apprentissage automatique, les données d'image d'entrée ayant été soumises au traitement de pavage ;
acquérir, au moyen du circuit de traitement, des données d'image prédites montrant une cible de détection en soustrayant les données d'image d'entrée des données d'image étiquetée de sortie ; et
effectuer un traitement de pavage inverse, au moyen du circuit de traitement, sur les données d'image prédites, le traitement de pavage inverse effectuant une combinaison en ignorant une portion d'une moitié extérieure d'une portion de bord se chevauchant dans chaque partie des données d'image prédites avant la combinaison,
dans lequel,
dans l'étape consistant à effectuer le traitement de pavage inverse, la teinte, la saturation et la luminosité sont ajustées sur la base d'une couleur prédéterminée pour chaque type de défaut entre une pluralité de parties des données d'image prédites avant la combinaison.

8. Procédé de détection de défaut selon la revendication 7, comprenant en outre une étape consistant à :
classifier un défaut dans les données d'image de l'objet cible d'inspection selon la couleur prédéterminée comprise dans les données d'image prédites.

9. Procédé de détection de défaut selon la revendication 7, comprenant en outre une étape consistant à :
dans un cas où les données d'image prédites comprennent une portion d'une couleur qui n'est aucune des couleurs prédéterminées, classifier la portion de la couleur en tant que portion dans laquelle un défaut qui n'est aucun des types de défauts est détecté.

10. Procédé de détection de défaut selon l'une quelconque des revendications 7 à 9, dans lequel
le modèle d'apprentissage automatique comprend un réseau neuronal convolutif (CNN) ou un réseau entièrement convolutif (FCNN).

11. Programme informatique amenant le circuit de traitement à exécuter le procédé de détection de défaut selon l'une quelconque des revendications 1 à 10.

12. Système de détection de défaut comprenant un dispositif informatique et un dispositif de stockage, dans lequel
le dispositif informatique exécute le procédé de détection de défaut selon l'une quelconque des revendications 1 à 10.
